# EUROPEAN PATENT APPLICATION

(11) **EP 4 053 698 A1**
(43) Date of publication of application: **07.09.2022**
(21) Application number: 21160981.3
(22) Date of filing: 05.03.2021
(51) Int. Cl.: G06F 9/455, G06F 9/50, H04L 29/08

(54) **ON-DEMAND EDGE-NETWORK DEPLOYMENT BY INDUSTRIAL EQUIPMENT**

(71) Applicant: Siemens Aktiengesellschaft, 80333 München (DE)
(72) Inventor: Frank, Reinhard, 81369 München (DE); Sauer, Markus, 81739 München (DE); Zeiger, Florian, 85635 Höhenkirchen-Siegertsbrunn (DE)

(57) **Abstract**

The invention discloses an automated method for configuring or re-configuring and using computational and network capacity at a factory by at last one equipment (4), whereby:
- at a, the equipment producing, manufacturing site (4.1), at least one software-based application (5) is installed in the equipment (4), and
- the equipment (4) is set up and configured
- by determining the demand of deployment of computational resources and communication resources of the computational and network capacity, and
- by determining the demand of deployment of a network connectivity configuration (6) needed for the application (5),

- whereby the deployment is performed when the equipment (4) is registered at a factory administration unit (8) at the factory.

The invention further discloses a corresponding equipment and a use of such an equipment.

## Description

### FIELD OF THE INVENTION

The present invention relates to an automated method for configuring or re-configuring and using computational and network capacity at a factory by at last one equipment. The equipment produced at a manufacturing site comprises at least one software-based application. The present invention further relates to an associated equipment and a use of such an equipment.

### BACKGROUND OF THE INVENTION

Equipment manufacturers usually do not only produce a machine that runs completely alone. In the digitalized Industry 4.0 world, several IT (= Information Technology) and OT (= Operation Technology) components are available to operate equipment efficiently and safe. Therefore, equipment manufacturers also configure a set of software components that leverage the full capabilities of their hardware components. These software components are not anymore only a small operating system on the hardware micro controller - nowadays different software components interact and communicate with large numbers of sensors, edge and cloud services, and control components. Integrating of these application environments and services with its distinct networking and connectivity requirements are a very complex and challenging task, as common industrial networks and infrastructures usually are not designed to handle these requests.

There exist two common approaches:
1) Equipment manufacturers must bring their own networking and computing infrastructure, e.g. specialized modems, industrial PCs, and must configure their own infrastructure. This includes also huge efforts for integrating their network segment with the existing factory network infrastructure.
   Disadvantage is: Equipment manufacturers must comply to the IT/OT requirements of all their customers, and there are many different guidelines to follow per customer. Following these very complex requirements lead to huge efforts and costs.
2) The factory owner/operator creates the required network and computing infrastructure and manually installs all required components in the infrastructure.
   Disadvantage is: Equipment manufacturers cannot pre-define their connectivity and computing environments, thus leading to huge integration and validation efforts of the applications.

### SUMMARY OF THE INVENTION

The objective of the present invention is to provide a solution for on-demand edge-network deployment at a factory for industrial equipment used at the factory.

To accomplish the objective, the present invention provides a solution according to the independent claims. Advantageous embodiments are provided in the dependent claims.

According to one aspect, the invention discloses how user defined application environments, as an example virtual communication networks, can be configured and rolled out on a typically already existing factory's infrastructure on-demand.

Typically, OT environments have an industrial edge-cloud infrastructure and the corresponding physical communication infrastructure in place and are configurable to host different networks.

OT (Operational technology) is hardware and software that detects or causes a change, through the direct monitoring and/or control of industrial equipment, assets, processes and events. The term has become established to demonstrate the technological and functional differences between traditional IT systems and Industrial Control Systems environment, the so-called "IT in the non-carpeted areas". Examples of operational technology include for example PLCs, SCADA, DCS, and Computer Numerical Control (CNC).

Equipment manufacturers have their own hardware setup and some software components that require a special interaction/communication with other software components of the manufacturer or also components and services of other companies.

With the invention, equipment manufacturers can now define their own application environments and network definitions and deploy it into the factory owner's IT/OT infrastructure in an on-demand fashion. The proposed method is not only designed for initial deployment of equipment, it can also be used for reconfiguration of the system during runtime (e.g., a AGV (= automated transport vehicle) is assigned to another production line and needs reconfiguration of its IT/OT components) .

Simplified, the disclosed method allows, that if new components (e.g., AGVs) are deployed into an existing infrastructure (e.g., communication) of an environment (e.g., a factory), the new components come piggyback with necessary information, configuration, and components in order to establish automatically on admission all necessary functionality virtually in the existing infrastructure of the environment, where they are deployed.

The disclosed approach allows equipment manufacturer to create and deploy their own virtual infrastructure, e.g., (virtualized) networks, and virtualized applications in the target infrastructures of their customers. This significantly simplifies the commissioning and operations of equipment as a very high degree of pre-configuration and testing is possible. The level of automation for commissioning will be significantly improved not only for equipment and application but also for the communication and compute infrastructure associated. In addition, this can also significantly reduce the hardware costs of an installations as software service components which are today as a precaution deployed to different compute resources can now be deployed in controllable virtualized common edge cloud of the customers.

OT administrators can validate the planned setups and configurations to ensure compliance to their regulations. Also, pre-defined templates (e.g., for factory-wide services and external connectivity) of the manufacturers can be used, so that OT administrators can control incoming and outgoing connections. OT administrators are also able to guarantee specific network and compute SLAs to the specific suppliers and can validate in case of failures, where the source of this failure lies.

The invention claims an automated method for configuring or re-configuring and using computational and network capacity at a factory by at last one equipment, whereby:
- at least one software-based application is installed in the equipment at a, the industrial equipment producing manufacturing site, and
- the equipment is set up and configured
   - by determining the demand of deployment of computational resources and communication resources of the computational and network capacity, and
   - by determining the demand of deployment of a network connectivity configuration needed for the application,
- whereby the deployment is performed when the equipment is registered at a factory administration unit at the factory.

Factory means and includes all kind of production facilities, e.g. manufacturing sites, assembly lines, and shop floors.

In a further embodiment the equipment is an industrial equipment, comprising at least one computational device and at least one communication device.

In a further embodiment with the network connectivity configuration different types of connectivity needed for the application in the equipment are described.

In a further embodiment of the method the network is part of an industrial edge cloud.

An edge cloud is used to decentralize (processing) power to the edges (clients/devices) of networks. Traditionally the computing power of servers is used to perform tasks such as data minimisation or to create advanced distributed systems. Within the cloud model, such 'intelligent' tasks are performed by servers so they can be transferred to other devices with less or almost no computing power. In the patent application WO 2020/002030 A1 an example of an edge cloud is disclosed.

In a further embodiment of the method the equipment is set up and configured to make the application available for deployment to the network at the factory.

In a further embodiment of the method the equipment is set up and configured to package or explicitly split different applications to software containers or virtual machines.

In a further embodiment of the method the equipment is set up and configured to define an application environment at the factory for the application.

In a further embodiment of the method the application environment comprises the requirements of the application and the results of packaging applications regarding memory space, compute requirements, and storage capacity, to optimize the deployment mechanism for placement of the equipment in the network at the factory.

The invention further claims an equipment for configuring or re-configuring and using computational and network capacity at a factory, whereby the equipment comprises:
- at least one software-based application, installed at an industrial equipment producing, manufacturing site, and
- a set-up and configuration
   - determining the demand of deployment of computational resources and communication resources of the computational and network capacity, and
   - determining the demand of deployment of a network connectivity configuration needed for the application,
- whereby deployment means deployment when the equipment is registered at a factory administration unit at the factory.

In a further embodiment the equipment is an industrial equipment, comprising at least one computational device and at least one communication device.

In a further embodiment the industrial equipment is an autonomous guided vehicle.

The invention finally claims the use of the inventive equipment in an edge-cloud of the factory, whereby the edge-cloud is hosting the computational and network capacity for the equipment.

In a further embodiment of the use the equipment undertakes intralogistics tasks in the factory.

Further benefits and advantages of the present invention will become apparent after a careful reading of the detailed description with appropriate reference to the accompanying drawings.

### BRIEF DESCRIPTION OF THE DRAWINGS

- FIG. 1: shows an illustration of an industrial edge-cloud and edge-networks at a factory,
- FIG. 2: illustrates how equipment manufacturers define their own application environments, including connectivity and networking,
- FIG. 3: shows an illustration of the virtual tenant network of an equipment manufacturer deployed on the shared infrastructure at a factory edge-cloud,
- FIG. 4:: shows a block diagram of the main units of the system, and
- FIG. 5:: shows a flow chart of the deployment method.

### DETAILED DESCRIPTION OF THE INVENTION

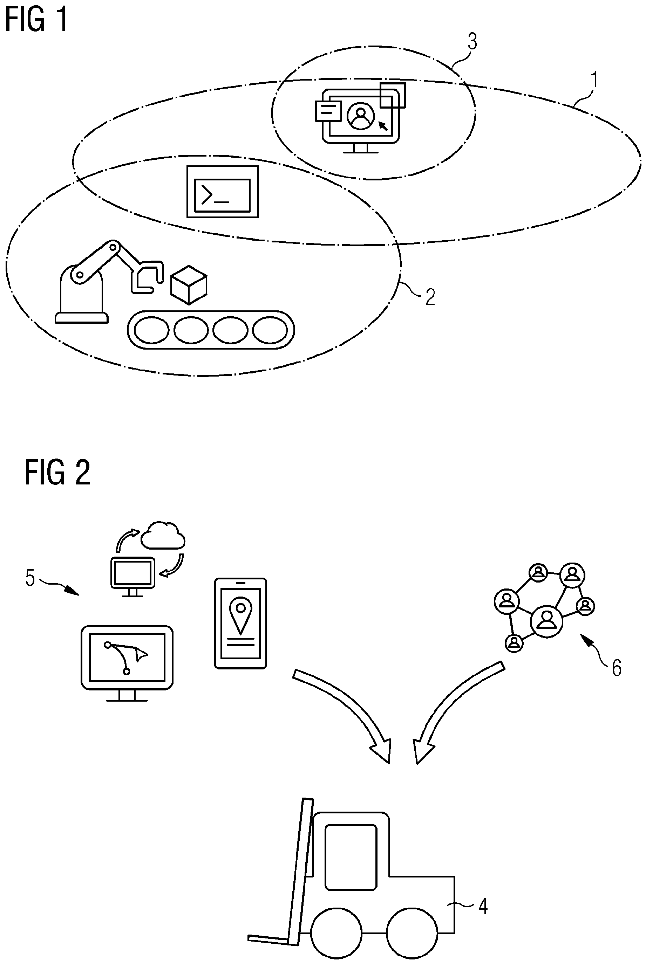

Typically, OT environments have an industrial edge-cloud infrastructure and the corresponding physical communication infrastructure in place and are configurable to host different networks - usually driven by the network segment owners or the purpose of the network. Fig. 1 shows an illustration of an industrial edge-cloud and edge-networks at a factory. The arrangement comprises the physical infrastructure 1, a virtual network 2 for a production cell and an administration network 3.

FIG. 2 illustrates how equipment manufacturers 4.1 define their own application environments 5 and "local" connectivity and networking requirements 6 for the produced and deployed equipment 4. Equipment manufacturers 4.1 have their own hardware setup and some software components that require a special interaction and/or communication with other software components of the manufacturer or also components and services of other companies.

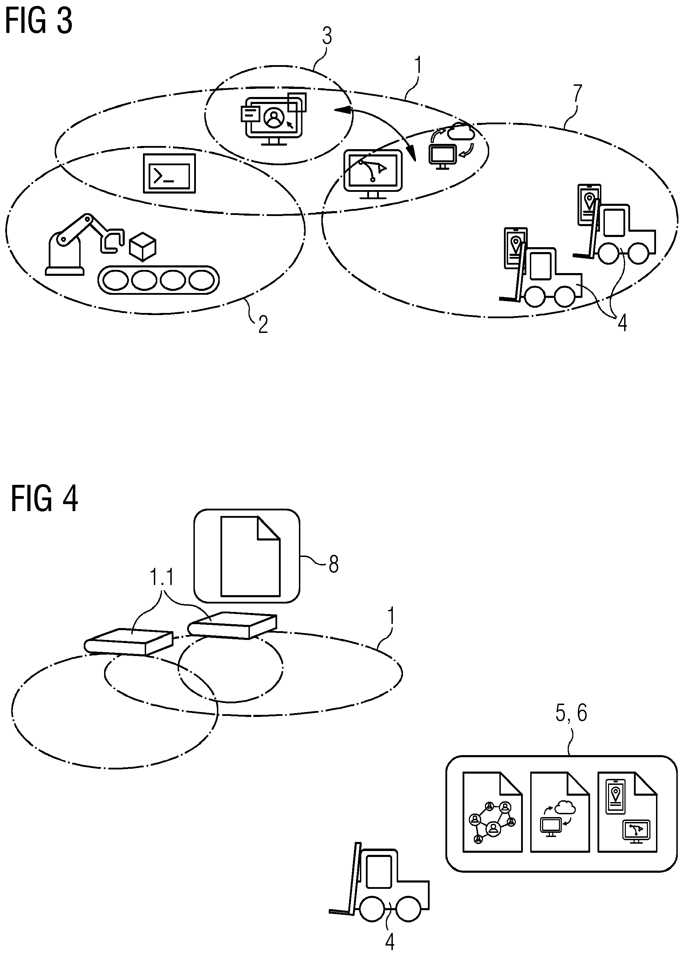

With the invention, equipment 4 manufacturers can now define their own application 5 environments and network definitions 6 and deploy it into the factory owner's IT/OT infrastructure in an on-demand fashion. FIG. 3 shows an illustration of the virtual tenant network 7 of an equipment manufacturer 4.1 deployed on the shared infrastructure at a factory edge cloud with its physical infrastructure 1 and its administration network 3.

FIG. 4 shows a block diagram of the main components of a system using one embodiment of the inventive method. In the factory infrastructure following components are foreseen.

Firstly, an industrial edge-cloud is the core of OT infrastructure and hosts virtualized applications and application environments on industrial compute equipment (industrial PCs), thus, providing computing resources close to factories (e.g., production facilities or shop floors).

The industrial edge-network is running on a shared physical communication infrastructure 1 with its compute nodes 1.1 and allows for a setup of a multi-tenancy capable networking infrastructure through virtual networks with guaranteed resource access and industry standards for security.

A factory administration module 8 is operated and maintained by factory's OT/IT administrator. It is responsible for configuration and operations of the OT infrastructure. Through the OT administration module, the administrator can validate requests (resource access, connectivity, on-demand networks, and virtualized applications) before deployment. Reconfigurations of the system are also possible during runtime.

In an operational OT infrastructure several services already exist and are available as common infrastructure for other users as well (e.g., MQTT broker). In addition, also pre-defined connectivity rules must be followed (e.g., access restrictions, security regulations) and infrastructure specific configurations exist (e.g., default gateway). These available OT services and connectivity rules are available for the OT administrator so that these settings can easily be applied to the requests of users (e.g., modularized playbooks for Ansible). Typical content of the OT Services and connectivity descriptions are:
- Descriptions of available services (IP, access rules, protocol endpoints) in OT infrastructure, access managed by OT admin,
- External access (e.g. to Internet),
- OT-/factory-specific information of communication and control networks (e.g., proxy or default gateway),
- Security rules and firewall requirements.

The following components are defined by the equipment manufacturer 4.1 supplying the equipment 4.

Connectivity and Network description 6: Software components in the application 5 environment require communication. The "Connectivity and Network description 6" defines different types of connectivity needed for the manufacturer's 4.1 software components:
- Internal connectivity: communication links only between the manufacturer's Software components.
- External connectivity - connectivity to the outside world, Internet, or components of other stakeholders.
- Services provided by the manufacturer's Software components to external networks and other stakeholders.
- Services consumed by manufacturer's Software components the from external networks - these external services are either provided by the factory owner or other stakeholders.

Packaging of applications defines how manufacturer's 4.1 applications 5 are made available for deployment to the industrial edge-cloud. Here, different applications can be bundled or explicitly split to software containers or virtual machines.

Application environments: The software components necessary to operate equipment 4 are hosted in virtual environments (e.g., Software container, virtual machines) packaged into pre-defined application environments. The description of the application environment defines the requirements of the applications and the results of the packaging regarding memory, compute requirements, and storage, so that the deployment mechanism can optimize placement of components in the industrial edge-cloud.

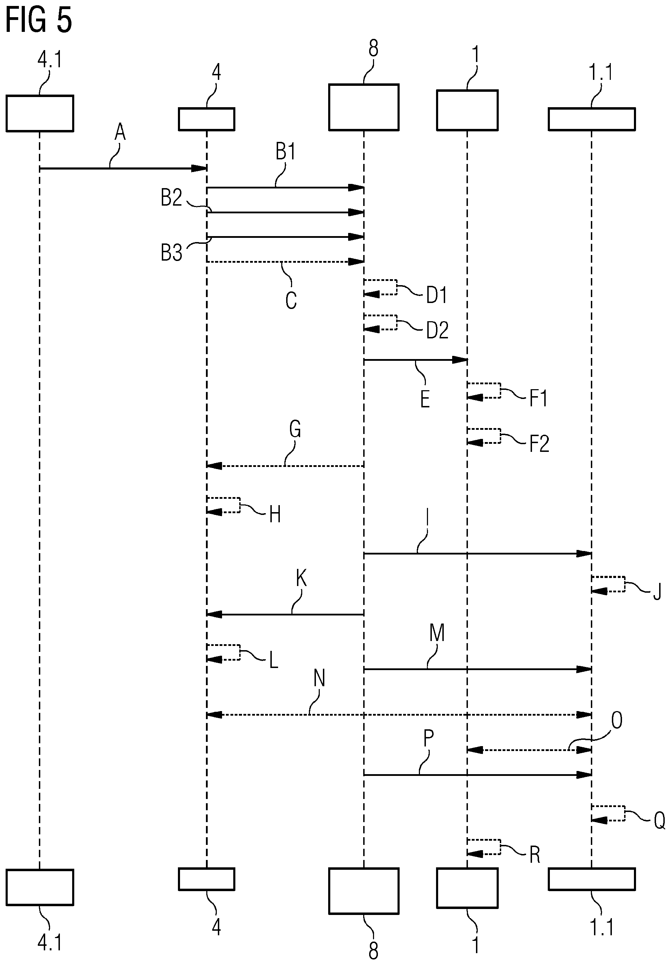

FIG. 5 shows a flow chart of the use of the described method in a nutshell. The following steps between equipment manufacturer 4.1, equipment 4, factory administration module 8, edge cloud 1 and the physical industrial network are performed in the following sequence:
- A:: Definition of connectivity and network, application packages, and application environments
- B1:: connectivity and network description
- B2:: packaging of applications
- B3:: application environment
- C:: connect to industrial network, e.g. via onboarding zone
- D1:: validation and check
- D2:: augment connectivity and network description with OT services and connectivity
- E:: application packages
- F1:: configure and install application packages
- F2: initialize start-up of application environments for equipment
- G:: configuration of appropriate application packages and trigger set-up
- H:: setup of configures application packages
- I:: configure virtual network for equipment according to augmented connectivity and network description
- J:: create and start-up virtual tenant network(s)
- K:: set-up network configuration and trigger set-up
- L:: network configuration and set-up
- M:: configure service endpoints
- N:: create service endpoints and create virtual network
- O:: create service endpoints and connect applications to virtual network(s)
- P:: create external connectivity (optional)
- Q:: create and set-up virtual network function for external connectivity (optional)
- R:: finalize start-up application environments for equipment

Subsequently, an embodiment of the invention is described. One example where the method would have significant business value are intralogistics solutions. A typical intralogistics solution has the following major functional components:
1. Transport Units (e.g. AGVs, AMRs, human-operated forklifts), which execute transport jobs in a specific context of the application.
2. Transport Requester (e.g. Enterprise IT systems, handhelds, automation systems like production machines), which create the demand that transport jobs are performed by the transport units.
3. Fleet management and coordination, which coordinates the assignment of transport jobs to transport units either in a centralized or decentralized, self-organizing fashion.
4. Monitoring and analytics components, which allow analysis and visualization of the intralogistics solution.

Key challenges for application of these intralogistics solutions are:
1. Transport Units (as well as some of the Transport Requesters) are mobile across the application environment (e.g. whole manufacturing side). Thus, a connectivity coverage across major parts of the application environment is needed.
2. Intralogistics and production are two separate applications which have specific demands on the communication network (e.g. bandwidth, latencies). Both applications, if running on the same infrastructure, should not have any unpredicted influence on the performance of each other. It is typically very difficult to guarantee this as the intralogistics and production solutions are provided by different supplier, which typically do not disclose the details of their solutions.
3. Management and monitoring components need certain compute power. Typically, the questions arise where this will be deployed in the application environment and how this additional compute resources will be maintained.

These challenges can be addressed by two approaches, either the intralogistics solution comes with its own infrastructure equipment (communication and computation) or all components are integrated into the existing application environment infrastructure. The first solution is very expensive as a lot of equipment must be purchased and operated in addition to the existing infrastructure. The second approach today has the disadvantages that an extensive alignment and definition phase for the integration is needed and typically long commissioning and testing phases are required before system can go operational.

The proposed method targets to significantly improvements of the second approach, by application of network and compute virtualization. For the intralogistics application this would be applied like described in the following:
1. A tenant network context is defined by the intralogistics solution supplier for a specific customer e.g. IntralogisticsForCustomerX
2. For this IntralogisticsForCustomerX setup the following things are defined as example:
   a. Connectivity and Network description:
      i. Internal connectivity
         1. MQTT pub/sub with SLA y1
         2. HTTP based logging with SLA y2
         3. Internal DNS service
      ii. External connectivity
         1. https connection for update management by supplier
         2. ssh connection for remote support by supplier
         3. https connection for equipment monitoring by supplier
      iii. Services provided
         1. Service to send new transport jobs to the intralogistics application (REST API)
         2. Service to request monitoring data from the intralogistics application (REST API)
      iv. Services consumed
         1. Central customer error notification service (REST API)
   b. Packaging of applications
      i. Packaging of monitoring, analytics and coordination components as docker containers c. Application environments
      i. Five Docker containers to be executed in edge cloud environment
         1. MQTT broker with compute requirements x1
         2. Dashboard web application with compute requirements x2
         3. Fleet management application with compute requirements x3
         4. Monitoring and analytics application with compute requirements x4
         5. System update campaign manager with compute requirements x5
3. These definitions and corresponding applications will be integrated into the equipment (e.g. AGVs) to be shipped to the intralogistics customer
4. As soon as the equipment is shipped to the customer, a first component is turned on, and a connection to the OT administration module is established and the request to instantiate the setup of the IntralogisticsForCustomerX context in the customer infrastructure is sent.
5. After the setup procedure for the first equipment component is done, all the other components can be added subsequently in an automated plug and perform fashion.

By applying the proposed mechanism commissioning into customers infrastructure can be significantly simplified. It is a plug and perform mechanism which allows automation of commissioning not only for the specific equipment and application but also for the infrastructure.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: industrial edge cloud
- 1.1: physical infrastructure
- 1.2: compute nodes
- 2: virtual network for a production cell
- 3: administration network
- 4: equipment
- 4.1: equipment manufacturer
- 5: application
- 6: connectivity and networking requirements of the equipment 4
- 7: virtual tenant network
- 8: factory administration module

- A: definition of connectivity and network, application packages, and application environments
- B1: connectivity and network description
- B2: packaging of applications
- B3: application environment
- C: connect to industrial network, e.g. via onboarding zone
- D1: validation and check
- D2: augment connectivity and network description with OT services and connectivity
- E: application packages
- F1: configure and install application packages
- F2: initialize start-up of application environments for equipment
- G: configuration of appropriate application packages and trigger set-up
- H: setup of configures application packages
- I: configure virtual network for equipment according to augmented connectivity and network description
- J: create and start-up virtual tenant network(s)
- K: set-up network configuration and trigger set-up
- L: network configuration and set-up
- M: configure service endpoints
- N: create service endpoints and create virtual network
- O: create service endpoints and connect applications to virtual network(s)
- P: create external connectivity (optional)
- Q: create and set-up virtual network function for external connectivity (optional)
- R: finalize start-up application environments for equipment

## Claims

1. Automated method for configuring or re-configuring and using computational and network capacity at a factory by at least one equipment (4), whereby:
- at a, the equipment producing, manufacturing site (4.1), at least one software-based application (5) is installed in the equipment (4), and
- the equipment (4) is set up and configured
- by determining the demand of deployment of computational resources and communication resources of the computational and network capacity, and
- by determining the demand of deployment of a network connectivity configuration (6) needed for the application (5),
- whereby the deployment is performed when the equipment (4) is registered at a factory administration unit (8) at the factory.

2. Method according to claim 1, whereby
the equipment (4) is an industrial equipment, comprising at least one computational device and at least one communication device.

3. Method according to claim 1 or 2, whereby
with the network connectivity configuration (6) different types of connectivity needed for the application (5) of the equipment (4) are described.

4. Method according to one of the previous claims, whereby the network (1.1) is part of an industrial edge cloud (1).

5. Method according to one of the previous claims, whereby the equipment (4) is set up and configured to make the application available for deployment to the network (1.1) at the factory.

6. Method according to claim 5, whereby
the equipment (4) is set up and configured to package or explicitly split different applications to software containers or virtual machines.

7. Method according to one of the previous claims, whereby the equipment (4) is set up and configured to define an application environment at the factory for the application (4).

8. Method according to claim 7 and 6, whereby
the application environment comprises the requirements of the application (4) and the results of packaging applications regarding memory space, compute requirements, and storage capacity, to optimize the deployment method for placement of the equipment (4) in the network (1.1) at the factory.

9. Equipment (4) for configuring or re-configuring and using computational and network capacity at a factory, whereby the equipment comprises:
- at least one software-based application (5), installed at a, the equipment producing, manufacturing site (4.1), and
- a set-up and configuration
- determining the demand of deployment of computational resources and communication resources of the computational and network capacity, and
- determining the demand of deployment of a network connectivity configuration (6) needed for the application (5),
- whereby deployment means deployment when the equipment (4) is registered at a factory administration unit (8) at the factory.

10. Equipment according to claim 9, whereby
the equipment (4) is an industrial equipment, comprising at least one computational device and at least one communication device.

11. Equipment according to claim 10, whereby
the industrial equipment is an autonomous guided vehicle.

12. Use of equipment (4) according to one of the claims 9 to 11 in an edge cloud (1) of the factory, whereby the edge cloud deploys the computational and network capacity for the equipment (4).

13. Use according to claim 12, whereby
the equipment (4) undertakes intralogistics tasks in the factory.
